# EUROPEAN PATENT APPLICATION

(11) **EP 4 332 729 A1**
(43) Date of publication of application: **06.03.2024**
(21) Application number: 21939387.3
(22) Date of filing: 17.12.2021
(51) Int. Cl.: G06F 1/28, A24F 40/90

(54) **DISPLAY DEVICE, SUCTION DEVICE, DISPLAY METHOD, AND PROGRAM**

(30) Priority: 28.04.2021 JP 2021075848
(71) Applicant: Japan Tobacco Inc., Tokyo 105-6927 (JP)
(72) Inventor: YOSHIDA, Ryo, Tokyo 130-8603 (JP); AOYAMA, Tatsunari, Tokyo 130-8603 (JP); KAWANAGO, Hiroshi, Tokyo 130-8603 (JP); NAGAHAMA, Toru, Tokyo 130-8603 (JP); FUJIKI, Takashi, Tokyo 130-8603 (JP)
(74) Representative: Hoffmann Eitle
(86) International application number: PCT/JP2021/046760
(87) International publication number: WO 2022/230232

(57) **Abstract**

Provided is a display device including a plurality of display units for displaying a remaining capacity of a battery; and a control unit that performs control to change a display mode of all of the plurality of display units in a case where the remaining capacity of the battery is larger than a first remaining capacity to present a change of the remaining capacity of the battery within a range larger than the first remaining capacity, to change a display mode of at least one display unit among the plurality of display units to a first display mode in a case where the remaining capacity of the battery becomes less than or equal to the first remaining capacity, and to change the display mode of the at least one display unit to a second display mode in a case where the remaining capacity of the battery becomes less than or equal to a second remaining capacity lower than the first remaining capacity.

## Description

### Technical Field

The present invention relates to a display device, an inhaler device, a display method, and a program.

### Background Art

PTL 1 describes a vaporizer including a printed circuit board operable to detect the voltage remaining in a battery such that an LED light may be illuminated in accordance with the remaining voltage.

PTL 2 describes an inhalation component generation device for performing a first notification when a value indicating a remaining capacity of a power source is greater than or equal to a first threshold, performing a second notification when the value representing the remaining capacity of the power source is less than the first threshold and greater than or equal to a second threshold smaller than the first threshold, and performing a third notification when the value representing the remaining capacity of the power source is less than the second threshold, the first notification including a first light emission color provided by a light emitting element, the second notification including a second light emission color provided by the light emitting element, the third notification including a third light emission color provided by the light emitting element, the first light emission color, the second light emission color, and the third light emission color being different from each other.

### Citation List

### Patent Literature

PTL 1: International Publication No. WO2015/073975
PTL 2: International Publication No. WO2019/082250

### Summary of Invention

### Technical Problem

A configuration for providing notification that a remaining capacity of a battery becomes less than or equal to a first remaining capacity and that the remaining capacity of the battery becomes less than or equal to a second remaining capacity lower than the first remaining capacity by using all of a plurality of display units fails to make effective use of the plurality of display units.

It is an object of the present invention to provide notification that a remaining capacity of a battery becomes less than or equal to a first remaining capacity and that the remaining capacity of the battery becomes less than or equal to a second remaining capacity lower than the first remaining capacity while making effective use of a plurality of display units.

### Solution to Problem

To achieve the object described above, the present invention provides a display device including a plurality of display units for displaying a remaining capacity of a battery; and a control unit that performs control to change a display mode of all of the plurality of display units in a case where the remaining capacity of the battery is larger than a first remaining capacity to present a change of the remaining capacity of the battery within a range larger than the first remaining capacity, to change a display mode of at least one display unit among the plurality of display units to a first display mode in a case where the remaining capacity of the battery becomes less than or equal to the first remaining capacity, and to change the display mode of the at least one display unit to a second display mode in a case where the remaining capacity of the battery becomes less than or equal to a second remaining capacity lower than the first remaining capacity.

In a case where the remaining capacity of the battery is larger than the first remaining capacity, the control unit may perform control to change states of the plurality of display units to a reduced-luminance state one by one with a decrease in the remaining capacity of the battery. In this case, the at least one display unit may be one display unit whose state is changed last among the plurality of display units to the reduced-luminance state with a decrease in the remaining capacity of the battery.

The first display mode may be a mode of blinking at a first speed, and the second display mode may be a mode of blinking at a second speed faster than the first speed.

Further, the present invention also provides a display device including a plurality of display units for displaying a remaining capacity of a battery; and a control unit that performs control to change a display mode of at least one display unit among the plurality of display units to a first display mode in a case where the remaining capacity of the battery becomes less than or equal to a first remaining capacity, and to change the display mode of the at least one display unit to a second display mode in a case where the remaining capacity of the battery becomes less than or equal to a second remaining capacity lower than the first remaining capacity.

Further, the present invention also provides an inhaler device including a heating unit that heats a substrate holding an aerosol source with electric power from a battery to generate an aerosol; a plurality of display units for displaying a remaining capacity of the battery; and a control unit that performs control to change a display mode of all of the plurality of display units in a case where the remaining capacity of the battery is larger than a first remaining capacity to present a change of the remaining capacity of the battery within a range larger than the first remaining capacity, to change a display mode of at least one display unit among the plurality of display units to a first display mode in a case where the remaining capacity of the battery becomes less than or equal to the first remaining capacity, and to change the display mode of the at least one display unit to a second display mode in a case where the remaining capacity of the battery becomes less than or equal to a second remaining capacity lower than the first remaining capacity.

The first remaining capacity may be a remaining capacity of the battery required to complete heating of one substrate.

The second remaining capacity may be a predetermined remaining capacity less than the remaining capacity of the battery required to complete heating of one substrate. In this case, the predetermined remaining capacity may be a remaining capacity of the battery required to change the display mode of the at least one display unit to the second display mode.

Furthermore, the present invention also provides a display method including the steps of changing, in a case where a remaining capacity of a battery is larger than a first remaining capacity, a display mode of all of a plurality of display units to present a change of the remaining capacity of the battery within a range larger than the first remaining capacity; changing, in a case where the remaining capacity of the battery becomes less than or equal to the first remaining capacity, a display mode of at least one display unit among the plurality of display units to a first display mode; and changing, in a case where the remaining capacity of the battery becomes less than or equal to a second remaining capacity lower than the first remaining capacity, the display mode of the at least one display unit to a second display mode.

Still furthermore, the present invention also provides a program for causing a computer to implement the functions of changing, in a case where a remaining capacity of a battery is larger than a first remaining capacity, a display mode of all of a plurality of display units to present a change of the remaining capacity of the battery within a range larger than the first remaining capacity; changing, in a case where the remaining capacity of the battery becomes less than or equal to the first remaining capacity, a display mode of at least one display unit among the plurality of display units to a first display mode; and changing, in a case where the remaining capacity of the battery becomes less than or equal to a second remaining capacity lower than the first remaining capacity, the display mode of the at least one display unit to a second display mode.

### Advantageous Effects of Invention

According to the present invention, it is possible to provide notification that a remaining capacity of a battery becomes less than or equal to a first remaining capacity and that the remaining capacity of the battery becomes less than or equal to a second remaining capacity lower than the first remaining capacity while making effective use of a plurality of display units. Brief Description of Drawings
[Fig. 1] Figs. 1(a) and 1(b) are overall perspective views of an inhaler device according to an embodiment of the present invention.
[Fig. 2] Figs. 2(a) and 2(b) are external views of a panel and a body housing of the inhaler device according to the embodiment of the present invention.
[Fig. 3] Fig. 3 is a schematic diagram illustrating an example configuration of the inhaler device according to the embodiment of the present invention.
[Fig. 4] Figs. 4(a) to 4(h) are diagrams illustrating display modes of eight LEDs when the remaining battery capacity changes from 100% to 20%.
[Fig. 5] Fig. 5 is a diagram illustrating an example of a remaining battery capacity display step animation.
[Fig. 6] Fig. 6 is a graph illustrating a change in luminance in an increased brightening animation.
[Fig. 7] Fig. 7 is a diagram illustrating a display mode of the eight LEDs when the remaining battery capacity becomes less than or equal to 20%.
[Fig. 8] Fig. 8 is a diagram illustrating a display mode of the eight LEDs when the remaining battery capacity becomes less than or equal to the remaining capacity for no remaining stick substrates.
[Fig. 9] Fig. 9 is a graph illustrating a change in luminance in a blinking animation.
[Fig. 10-1] Fig. 10-1 is a flowchart illustrating an example operation of a control unit of the inhaler device according to the embodiment of the present invention.
[Fig. 10-2] Fig. 10-2 is a flowchart illustrating the example operation of the control unit of the inhaler device according to the embodiment of the present invention.

### Description of Embodiments

An embodiment of the present invention will be described in detail hereinafter with reference to the accompanying drawings.

### [Example External Configuration of Inhaler Device]

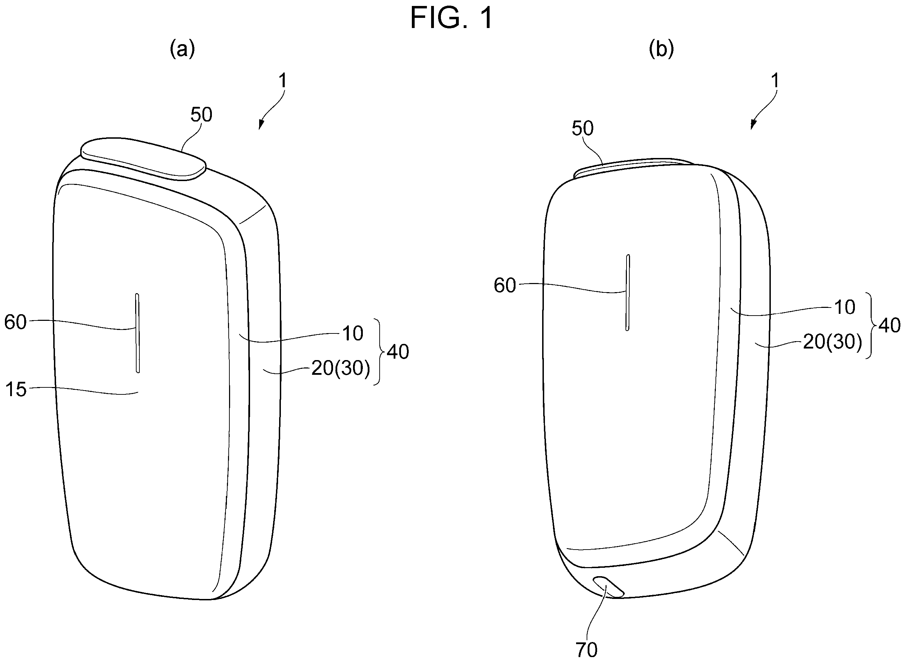

Figs. 1(a) and 1(b) are overall perspective views of an inhaler device 1 according to the present embodiment. Fig. 1(a) is an overall perspective view obliquely from above, and Fig. 1(b) is an overall perspective view obliquely from below. As illustrated in Figs. 1(a) and 1(b), the inhaler device 1 includes a panel 10, a body housing 20 to which the panel 10 is attachable in a removable manner, and a shutter 50. The panel 10 and the body housing 20 are formed of separate members. The panel 10 includes a display window 60 having a surface formed of a transparent material. The body housing 20 houses a body 30 of the inhaler device 1. Further, the body housing 20 includes an external connection terminal 70 such as a USB type C connector.

The panel 10 is attached to the body housing 20 to form an outermost housing 40 of the inhaler device 1. The inhaler device 1 including the panel 10 is capable of buffering heat released to the outside even when the body 30 produces heat. That is, the panel 10 functions to insulate heat produced from a heating unit of the body 30. Further, the panel 10 is formed so as to have a substantially curved surface. When attached to the body housing 20, the panel 10 defines an internal space together, with the surface of the body housing 20.

The housing 40 is desirably sized to fit in a user's hand. The user holds the inhaler device 1 with one hand while bringing their fingertip into contact with the surface of the panel 10. In response to the user pressing the surface of the panel 10 with their fingertip, the panel 10 is deformed so as to form a recess toward the body housing 20. As a result of such deformation of the panel 10, a protrusion on the panel 10 comes into contact with an operation button on the surface of the body housing 20, and consequently the operation button is pressed. That is, a portion of the surface of the panel 10 to be pressed by the fingertip forms a button region 15.

To deform the panel 10, for example, the user needs to press the button region 15 using a plurality of fingers at the same time. This requires a greater pressing force than when, for example, the user presses a single button disposed on the surface of the housing so as to protrude from the surface of the housing with their single finger. That is, the inhaler device 1 according to the present embodiment is advantageous in that it is possible to prevent unintended erroneous operation by the user such as erroneous pressing of an operation button in a bag. It is also advantageous in terms of prevention of mischiefs (child resistance) because it is difficult to easily press the button region 15 of the panel 10 with a pressing force of a child who is not appropriate as a user of the inhaler device 1.

The body housing 20 has an opening into which a stick substrate is to be inserted. In Fig. 1, the shutter 50 is illustrated as closing the opening. The shutter 50 has a slide mechanism and is movable along the surface of an outer shell between a first position for closing the opening and a second position for opening the opening. The opening and closing of the opening can be detected by a sensor (not illustrated) disposed in the vicinity of the first position and/or the second position. For example, the shutter 50 is provided with a magnet, and the opening and closing of the opening is detected by a magnetic sensor.

In response to the user sliding the shutter 50 along the side surface with their finger, the opening is opened. As a result of the opening being opened, the user can insert the stick substrate. After inserting the stick substrate, the user presses the surface of the panel 10 with their finger to press the operation button. As a result, the user can turn on power to the inhaler device 1.

### [Example External Configurations of Panel and Body Housing]

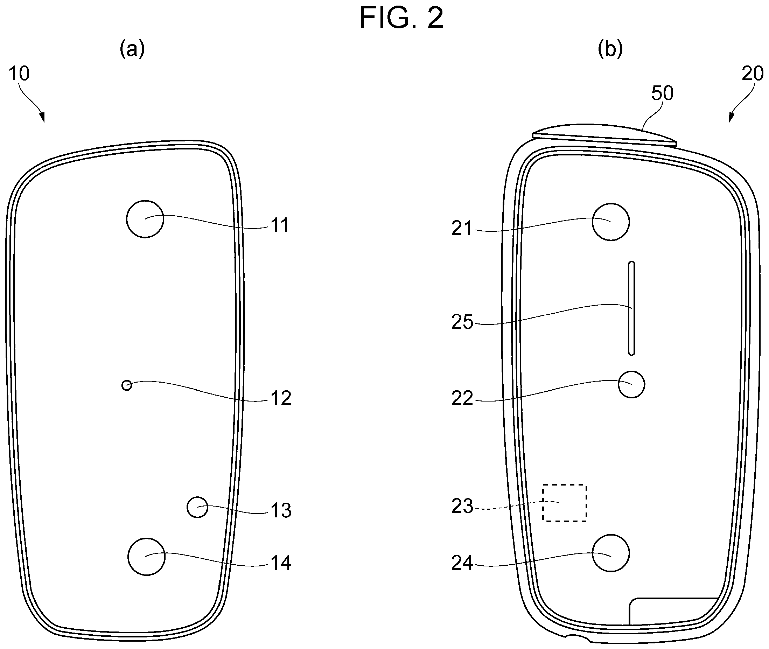

Figs. 2(a) and 2(b) are external views of the panel 10 and the body housing 20 of the inhaler device 1. Fig. 2(a) illustrates an external view of an inner surface of the panel 10, and Fig. 2(b) illustrates an external view of an outer surface of the body housing 20. The panel 10 is attached to the body housing 20 such that the inner surface of the panel 10 and the outer surface of the body housing 20 face each other.

As illustrated in Fig. 2(a), a magnet 11, a protrusion 12, a magnet 13, and a magnet 14 are arranged on the inner surface of the panel 10 in the longitudinal direction. When the panel 10 is attached to the body housing 20, the magnet 11 and the magnet 14 make the panel 10 adsorb on the body housing 20 due to their magnetic force (magnetic attraction). As a result, the panel 10 is held by the body housing 20. The protrusion 12 presses an operation button 22 disposed on the surface of the body housing 20. The magnet 13 is configured as a unit for applying a magnetic field to a sensor unit of the body 30. That is, in response to a magnetic field applied from the magnet 13, a magnetic sensor 23 of the body housing 20 detects the magnetic force to detect the panel 10.

As illustrated in Fig. 2(b), a magnet 21, a through hole 25, the operation button 22, and a magnet 24 are arranged on the outer surface of the body housing 20 in the longitudinal direction from the shutter 50 side. The magnetic sensor 23 is disposed on the inner surface of the body housing 20 (more precisely, on a substrate having a substantially zero distance from the inner surface) at a position between the operation button 22 and the magnet 24 in the longitudinal direction. The magnet 21, the operation button 22, the magnetic sensor 23, and the magnet 24 of the body housing 20 correspond to the magnet 11, the protrusion 12, the magnet 13, and the magnet 14 of the panel 10, respectively. That is, when the panel 10 is attached to the body housing 20, the panel 10 and the body housing 20 are aligned and face each other.

The magnet 21 and the magnet 24 of the body housing 20 adsorb the magnet 11 and the magnet 14 of the panel 10, respectively, due to their magnetic force (magnetic attraction). That is, the magnets 11 and 21 are attracted to each other, and the magnets 14 and 24 are attracted to each other to hold the panel 10 in such a manner that the panel 10 is attachable to the body housing 20. The magnets 11 and 14 of the panel 10 and the magnets 21 and 24 of the body housing 20 are desirably formed of permanent magnets.

The operation button 22 is disposed on a surface to which the panel 10 is to be attached. In other words, when the panel 10 is attached to the body housing 20, the operation button 22 is covered by the panel 10 and pressed by the protrusion 12 of the panel 10. This makes it possible to switch between powered-on and powered-off states of the inhaler device 1, for example.

The magnetic sensor 23 detects a magnetic force based on a magnetic field applied from the magnet 13 of the panel 10. For example, the magnetic sensor 23 is desirably a Hall sensor including a Hall element. This makes it possible to detect an attachment of the panel 10 to the body housing 20.

The magnetic sensor 23 of the body housing 20 is arranged so as to face the magnet 13 of the panel 10 through the inner surface of the body housing 20 when the panel 10 remains attached to the body housing 20. That is, when the panel 10 is attached to the body housing 20, the distance between the magnetic sensor 23 of the body housing 20 and the magnet 13 of the panel 10 is minimized.

Further, the magnetic sensor 23 of the body housing 20 is configured not to detect the magnetic fields generated by the two magnets 21 and 24 of the body housing 20. Specifically, the magnetic sensor 23 is desirably arranged on the inner surface of the body housing 20 at a position spaced apart from the two magnets 21 and 24 on the outer surface of the body housing 20. This makes it possible to reduce the influence of the magnetic fields from the two magnets 21 and 24 on the magnetic sensor 23 to substantially zero.

Further, it is desirable that the distance between the magnetic sensor 23 and the magnet 24 (or the magnet 21) of the body housing 20, which are spaced apart from each other, be larger than the distance between the magnet 13 and the magnetic sensor 23 when the panel 10 remains attached to the body housing 20. This makes it possible to detect an attachment of the panel 10 to the body housing 20 without consideration of the influence of the magnetic field of the magnet 24 on the magnetic sensor 23 but with appropriate consideration of only the influence of the magnetic field applied from the magnet 13 on the magnetic sensor 23.

The through hole 25 is an opening aligned with one or more light emitting diodes (LEDs) disposed in the body 30, and allows light from the LED(s) to pass therethrough to the display window 60 of the panel 10. This allows the user to view the light from the outer surface of the panel 10.

### [Example Configuration of Inhaler Device]

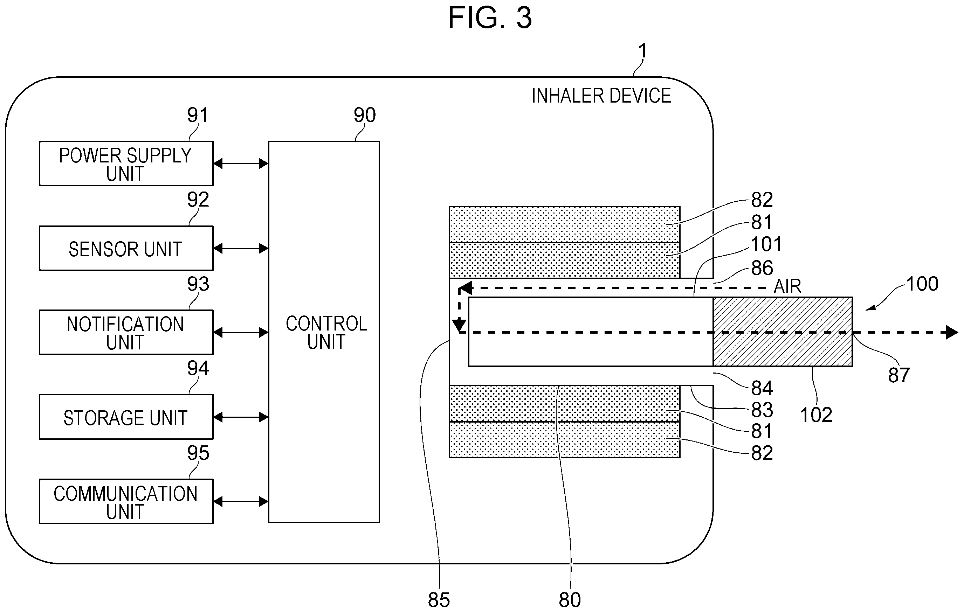

Fig. 3 is a schematic diagram illustrating an example configuration of the inhaler device 1. The inhaler device 1 is configured such that, for example, a stick substrate 100 having a flavor generating substrate such as an aerosol source serving as an inhalation component source and a filler containing a flavor source is inserted into the inhaler device 1. The aerosol source is not limited to a liquid but may be a solid. The inserted stick substrate 100 is heated from its outer circumference to generate an aerosol containing a flavor.

As illustrated in Fig. 3, the inhaler device 1 includes a control unit 90, a power supply unit 91, a sensor unit 92, a notification unit 93, a storage unit 94, a communication unit 95, a holding unit 80, a heating unit 81, and a heat insulating unit 82. The elements of the inhaler device 1 described above are housed in the body 30 illustrated in Fig. 1.

The control unit 90 functions as an arithmetic processing unit and a control device, and controls the overall internal operation of the inhaler device 1 in accordance with various programs. The control unit 90 is implemented by an electronic circuit such as a central processing unit (CPU) or a microprocessor.

The power supply unit 91 stores electric power. The power supply unit 91 supplies electric power to the components of the inhaler device 1 under the control of the control unit 90. The power supply unit 91 may be configured as, for example, a rechargeable battery such as a lithium ion secondary battery.

The sensor unit 92 acquires various kinds of information on the inhaler device 1. In an example, the sensor unit 92 is configured as a pressure sensor such as a condenser microphone, a flow sensor, a temperature sensor, or the like, and acquires a value associated with inhalation by the user. In another example, the sensor unit 92 is configured as an input device that receives an input of information from the user, such as a button or a switch.

The sensor unit 92 detects an attachment of the panel 10 to the body housing 20. For example, the sensor unit 92 is configured as a magnetic sensor (for example, a Hall sensor including a Hall element that detects magnetism by using the Hall effect). Further, the sensor unit 92 detects that the panel 10 including a magnetic field applying unit (for example, a magnet and/or a magnetic body) that applies a magnetic field to the magnetic sensor is in the vicinity of the sensor unit 92.

The notification unit 93 notifies the user of information. The notification unit 93 is configured as, for example, a display unit including a light emitting element such as an LED, a display device that displays an image, a sound output device that outputs sound, or a vibration device that vibrates.

For example, the LED notifies the user of operation information of the inhaler device 1 by using a predetermined light emission mode. Specifically, the LED emits light to present, to the user, a state indicating whether the inhaler device 1 is in a powered-on state, the progress of preliminary heating, the state of inhalation (such as the remaining time during which inhalation is available), and which operation mode the inhaler device 1 is currently in (such as an inhalation mode and/or a communication mode, for example).

The storage unit 94 stores various kinds of information for the operation of the inhaler device 1. The storage unit 94 is configured as, for example, a non-volatile storage medium such as a flash memory. In addition to computer-executable instructions for operating the inhaler device 1, the storage unit 94 also stores programs such as firmware and the like.

The communication unit 95 is a communication interface capable of performing communication conforming to any wired or wireless communication standard. Such a communication standard may be, for example, WiFi (registered trademark), Bluetooth (registered trademark), or the like in the case of wireless communication. In the case of wired communication, for example, a data communication cable is connected through the external connection terminal 70. Accordingly, data related to the operation of the inhaler device 1 is input/output to/from an external device.

The communication unit 95 may activate the communication function in response to an opening 84 being opened by the shutter 50, and may start communication with an external terminal using Bluetooth (registered trademark) or the like. The communication unit 95 may terminate communication with the currently communicating external terminal in response to the opening 84 being closed by the shutter 50. Specifically, the Bluetooth (registered trademark) connection between the communication unit 95 and the external terminal is desirably a connection via Bluetooth Low Energy (BLE).

The holding unit 80 has an internal space 83, and holds the stick substrate 100 with a portion of the stick substrate 100 being accommodated in the internal space 83. The holding unit 80 has the opening 84, which allows the internal space 83 to communicate with the outside, and holds the stick substrate 100 inserted into the internal space 83 through the opening 84. For example, the holding unit 80 is a tubular body having the opening 84 and a bottom portion 85 at its ends, and defines the internal space 83 having a columnar shape. In this specification, a direction in which the stick substrate 100 is inserted into the internal space 83 is referred to as a longitudinal direction of the inhaler device 1.

The holding unit 80 has a pressing portion and a non-pressing portion (both not illustrated) extending along an inner wall of the internal space 83 in the longitudinal direction. When the internal space 83 receives the stick substrate 100, the pressing portion presses the stick substrate 100 in a direction perpendicular to the longitudinal direction. Then, the stick substrate 100 is held by the holding unit 80 while being pressed and deformed by the pressing portion. As a result, the stick substrate 100 is heated from its outer circumference by the heating unit 81 while being pressed.

In contrast, a gap (not illustrated) is formed between the non-pressing portion and the stick substrate 100. As a result, the opening 84 and the bottom portion 85 are in communication with each other through the gap.

The holding unit 80 also has a function of defining a flow path of air to be supplied to the stick substrate 100. An air inlet hole 86, which is an inlet of air to the flow path, is the opening 84. More precisely, the air inlet hole 86 is the gap between the non-pressing portion and the stick substrate 100. Air flowing in through the air inlet hole 86 in response to inhalation by the user is transported to an air outlet hole 87, which is an outlet of air from the flow path, through the stick substrate 100 along an arrow indicated by a dotted line.

The stick substrate 100 includes a substrate portion 101 and a mouthpiece portion 102. The substrate portion 101 includes an aerosol source. When the stick substrate 100 remains held by the holding unit 80, at least a portion of the substrate portion 101 is accommodated in the internal space 83, and at least a portion of the mouthpiece portion 102 protrudes from the opening 84. When the user holds the mouthpiece portion 102 protruding from the opening 84 in their mouth and inhales, air flows into the internal space 83 through the air inlet hole 86, is transported to the air outlet hole 87 of the mouthpiece portion 102 through the bottom portion 85 along the arrow indicated by the dotted line, and reaches the oral cavity of the user together with aerosol generated from the substrate portion 101. The stick substrate 100 is an example of a substrate that holds the aerosol source

The heating unit 81 heats the aerosol source to atomize the aerosol source and generate an aerosol. The heating unit 81 is formed in a film shape and is arranged so as to cover the outer circumference of the holding unit 80. When the heating unit 81 produces heat, the substrate portion 101 of the stick substrate 100 is heated from the outer circumference, and an aerosol is generated. The heating unit 81 produces heat in response to electric power supplied from the power supply unit 91. In an example, electric power may be supplied in response to the sensor unit 92 detecting that the user has started inhalation, that a predetermined user input operation has been received, and/or that predetermined information has been input. The supply of electric power may be stopped in response to the sensor unit 92 detecting that the user has finished inhalation, that a predetermined user input operation has been received, and/or that predetermined information has been input. The heating unit 81 is an example of a heating unit that heats a substrate with electric power from a battery to generate an aerosol.

The heat insulating unit 82 prevents heat transfer from the heating unit 81 to the other components. For example, the heat insulating unit 82 is configured as a vacuum heat insulator, an aerogel heat insulator, or the like.

An example configuration of the inhaler device 1 has been described above. The configuration of the inhaler device 1 is not limited to that described above, and the inhaler device 1 may be configured in various ways as exemplified below.

In an example, the heating unit 81 may be formed in a blade shape and may be arranged so as to protrude from the bottom portion 85 of the holding unit 80 into the internal space 83. In this case, the heating unit 81 having a blade shape is inserted into the substrate portion 101 of the stick substrate 100, and heats the substrate portion 101 of the stick substrate 100 from the inside. In another example, the heating unit 81 may be arranged so as to cover the bottom portion 85 of the holding unit 80. The heating unit 81 may be configured as a combination of two or more of a first heating unit covering the outer circumference of the holding unit 80, a second heating unit having a blade shape, and a third heating unit covering the bottom portion 85 of the holding unit 80.

In addition, means for atomizing the aerosol source is not limited to heating using the heating unit 81. For example, the means for atomizing the aerosol source may be induction heating.

### [Overview of Operation of Inhaler Device]

In the inhaler device 1 described above, in the present embodiment, the notification unit 93 is constituted by a plurality of display units for displaying the remaining capacity of the rechargeable battery (hereinafter referred to as "remaining battery capacity") of the power supply unit 91. When the remaining battery capacity is larger than a first remaining capacity, the control unit 90 performs control to change the display mode of all of the plurality of display units to present a change of the remaining battery capacity within a range larger than the first remaining capacity. The change within the range larger than the first remaining capacity is, for example, a change from the full charge to the first remaining capacity. In this case, the full charge includes not only an exactly fully charged state but also a charged state in which the inhaler device 1 is slightly discharged until the inhaler device 1 is removed from the plug and starts to be used after the charging is completed. Thereafter, when the remaining battery capacity becomes less than or equal to the first remaining capacity, the control unit 90 performs control to change the display mode of at least one display unit among the plurality of display units to a first display mode. Still thereafter, when the remaining battery capacity becomes less than or equal to a second remaining capacity lower than the first remaining capacity, the control unit 90 performs control to change the display mode of the above-described at least one display unit among the plurality of display units to a second display mode.

If the remaining battery capacity is larger than the first remaining capacity, the control unit 90 may perform control to change the states of the plurality of display units to a reduced-luminance state one by one with a decrease in remaining battery capacity. In this case, the above-described at least one display unit among the plurality of display units may be one display unit whose state is changed last among the plurality of display units to the reduced-luminance state with a decrease in remaining battery capacity.

The first display mode may be a mode of blinking at a first speed, and the second display mode may be a mode of blinking at a second speed faster than the first speed.

The first remaining capacity may be a remaining battery capacity required to complete heating of one substrate.

The second remaining capacity may be a predetermined remaining capacity less than the remaining battery capacity required to complete heating of one substrate. In this case, the predetermined remaining capacity may be a remaining battery capacity required to change the display mode of the above-described at least one display unit among the plurality of display units to the second display mode.

Here, the plurality of display units are assumed to be N LEDs (N is a natural number). It is also assumed that the first remaining capacity is a remaining capacity for which the remaining number of stick substrates 100 that can be inhaled is one (the remaining capacity is hereinafter referred to as "remaining capacity for one remaining stick substrate"). The remaining capacity for one remaining stick substrate is a remaining battery capacity required to complete heating of one remaining stick substrate 100 in a preheating period and an inhalation period. The remaining capacity for one remaining stick substrate is an example of a remaining battery capacity required to complete heating of one substrate. Further, it is assumed that the second remaining capacity is a remaining capacity for which the remaining number of stick substrates 100 that can be inhaled is zero and that allows the LEDs to be operated (the remaining capacity is hereinafter referred to as "remaining capacity for no remaining stick substrates"). The remaining capacity for no remaining stick substrates is a remaining battery capacity determined in advance as a remaining battery capacity to such an extent that heating of one remaining stick substrate 100 in the preheating period and the inhalation period cannot be completed but the display mode of the LEDs can be changed. The remaining capacity for no remaining stick substrates is an example of a predetermined remaining capacity less than the remaining battery capacity required to complete heating of one substrate, and is an example of a remaining battery capacity required to change the display mode of at least one display unit among the plurality of display units to the second display mode.

### [Specific Example of Operation of Inhaler Device]

When the remaining battery capacity is larger than the remaining capacity for one remaining stick substrate, the control unit 90 performs control to change the display mode of N LEDs among the N LEDs to present a change from a remaining battery capacity of 100% to the remaining capacity for one remaining stick substrate. In the following description, eight LEDs arranged in a vertical line are taken as an example of the N LEDs, and the eight LEDs are represented by an LED #8, an LED #7, ..., and an LED # 1 in order from top to bottom. In the description, 20% is taken as an example of the remaining capacity for one remaining stick substrate. The change from 100% to 20% is expressed using the eight LEDs. That is, each LED represents a change of 10%. While the control unit 90 acquires integer data as a remaining battery capacity from a remaining capacity meter IC, the control unit 90 may acquire a remaining battery capacity other than the remaining battery capacity obtained by adding an integer multiple of 10% to 20%. In this case, it is desirable that the control unit 90 round off a value obtained by dividing a value obtained by subtracting 20% from the acquired remaining battery capacity by 10% to determine the number of LEDs to be normally lit.

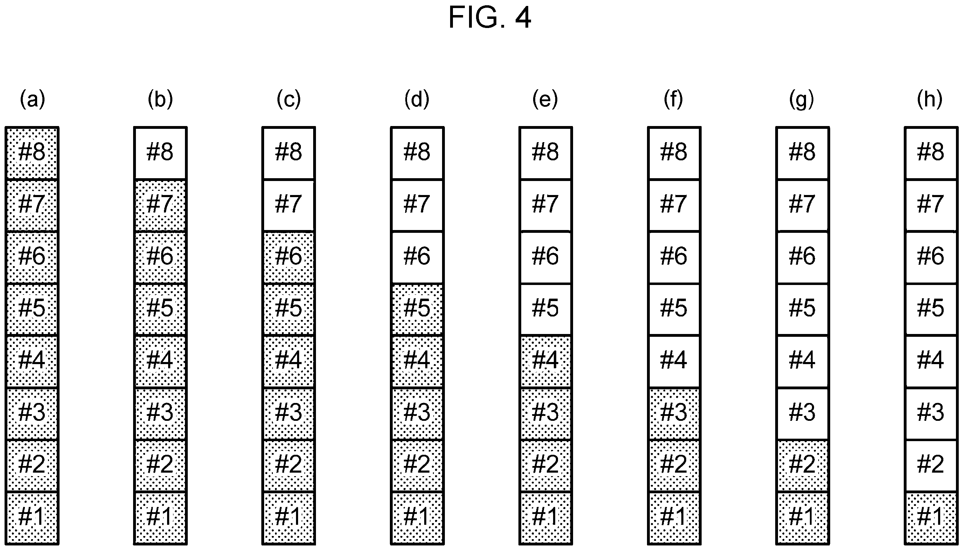

Figs. 4(a) to 4(h) are diagrams illustrating display modes of eight LEDs when the remaining battery capacity changes from 100% to 20%.

Fig. 4(a) illustrates a display mode of the eight LEDs when the remaining battery capacity changes from 100% to 90%. In this case, the control unit 90 causes all of the LEDs # 1 to #8 to be normally lit, as indicated by dot hatching in their thick solid-line boxes. In this specification, causing an LED to be normally lit means causing the LED to be lit with a maximum duty ratio of 100%, for example. The control unit 90 performs a remaining battery capacity display step animation, which will be described below, as a step animation that defines which LED among the LEDs # 1 to #8 is to be lit for each step to provide the display illustrated in Fig. 4(a). Further, the control unit 90 performs an increased brightening animation, which will be described below, as a luminance animation that defines a change in the luminance of each of the LEDs #1 to #8 to provide the display illustrated in Fig. 4(a).

Fig. 4(b) illustrates a display mode of the eight LEDs when the remaining battery capacity changes from 90% to 80%. In this case, the control unit 90 causes the LED #8 to be lit at a baseline level, as indicated by a white background in its thick solid-line box, and causes the LEDs #1 to #7 to remain lit normally, as indicated by dot hatching in their thick solid-line boxes. In this specification, causing an LED to be lit at the baseline level means causing the LED to be lit with a duty ratio of 1%, for example. As in Fig. 4(a), the control unit 90 performs the remaining battery capacity display step animation and the increased brightening animation to provide the display illustrated in Fig. 4(b).

Fig. 4(c) illustrates a display mode of the eight LEDs when the remaining battery capacity changes from 80% to 70%. In this case, the control unit 90 further causes the LED #7 to be lit at the baseline level, as indicated by a white background in its thick solid-line box, and causes the LEDs # 1 to #6 to remain lit normally, as indicated by dot hatching in their thick solid-line boxes. As in Fig. 4(a), the control unit 90 performs the remaining battery capacity display step animation and the increased brightening animation to provide the display illustrated in Fig. 4(c).

Fig. 4(d) illustrates a display mode of the eight LEDs when the remaining battery capacity changes from 70% to 60%. In this case, the control unit 90 further causes the LED #6 to be lit at the baseline level, as indicated by a white background in its thick solid-line box, and causes the LEDs # 1 to #5 to remain lit normally, as indicated by dot hatching in their thick solid-line boxes. As in Fig. 4(a), the control unit 90 performs the remaining battery capacity display step animation and the increased brightening animation to provide the display illustrated in Fig. 4(d).

Fig. 4(e) illustrates a display mode of the eight LEDs when the remaining battery capacity changes from 60% to 50%. In this case, the control unit 90 further causes the LED #5 to be lit at the baseline level, as indicated by a white background in its thick solid-line box, and causes the LEDs # 1 to #4 to remain lit normally, as indicated by dot hatching in their thick solid-line boxes. As in Fig. 4(a), the control unit 90 performs the remaining battery capacity display step animation and the increased brightening animation to provide the display illustrated in Fig. 4(e).

Fig. 4(f) illustrates a display mode of the eight LEDs when the remaining battery capacity changes from 50% to 40%. In this case, the control unit 90 further causes the LED #4 to be lit at the baseline level, as indicated by a white background in its thick solid-line box, and causes the LEDs # 1 to #3 to remain lit normally, as indicated by dot hatching in their thick solid-line boxes. As in Fig. 4(a), the control unit 90 performs the remaining battery capacity display step animation and the increased brightening animation to provide the display illustrated in Fig. 4(f).

Fig. 4(g) illustrates a display mode of the eight LEDs when the remaining battery capacity changes from 40% to 30%. In this case, the control unit 90 further causes the LED #3 to be lit at the baseline level, as indicated by a white background in its thick solid-line box, and causes the LEDs #1 and #2 to remain lit normally, as indicated by dot hatching in their thick solid-line boxes. As in Fig. 4(a), the control unit 90 performs the remaining battery capacity display step animation and the increased brightening animation to provide the display illustrated in Fig. 4(g).

Fig. 4(h) illustrates a display mode of the eight LEDs when the remaining battery capacity changes from 30% to 20%. In this case, the control unit 90 further causes the LED #2 to be lit at the baseline level, as indicated by a white background in its thick solid-line box, and causes only the LED #1 to remain lit normally, as indicated by dot hatching in its thick solid-line box. As in Fig. 4(a), the control unit 90 performs the remaining battery capacity display step animation and the increased brightening animation to provide the display illustrated in Fig. 4(h).

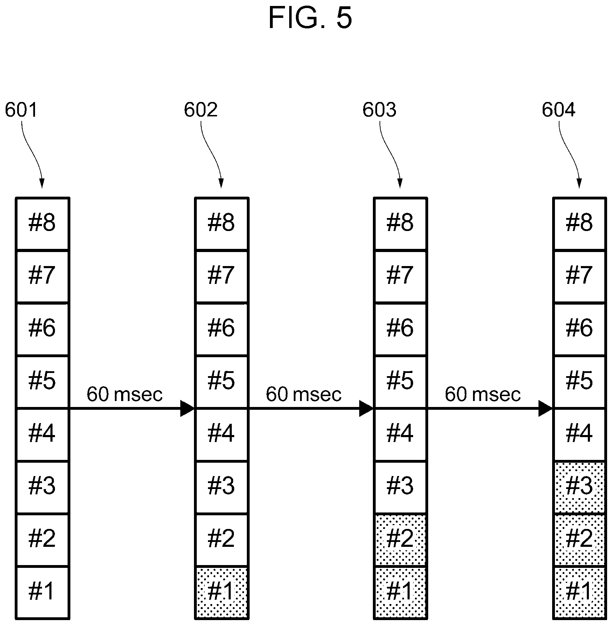

The remaining battery capacity display step animation will be described here. Fig. 5 is a diagram illustrating an example of the remaining battery capacity display step animation. In Fig. 5, the remaining battery capacity display step animation for providing the display illustrated in Fig. 4(f) is illustrated.

As illustrated in Fig. 5, initially, the LEDs #1 to #8 are displayed in a state 601. That is, all of the LEDs #1 to #8 are lit at the baseline level, as indicated by a white background in their thick solid-line boxes. After 60 milliseconds, the control unit 90 changes the display of the LEDs # 1 to #8 to a state 602. That is, the control unit 90 causes the LED # 1 to be newly lit normally, as indicated by dot hatching in its thick solid-line box. After another 60 milliseconds, the control unit 90 changes the display of the LEDs #1 to #8 to a state 603. That is, the control unit 90 causes the LED #2 to be newly lit normally, as indicated by dot hatching in its thick solid-line box. After still another 60 milliseconds, the control unit 90 changes the display of the LEDs #1 to #8 to a state 604. That is, the control unit 90 causes the LED #3 to be newly lit normally, as indicated by dot hatching in its thick solid-line box.

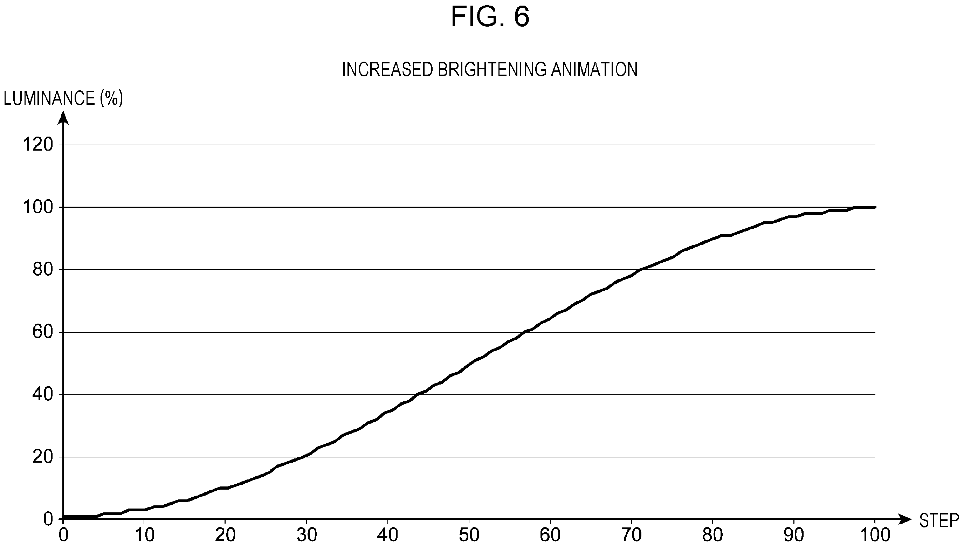

The increased brightening animation will be described. Fig. 6 is a graph illustrating a change in luminance in the increased brightening animation. Here, the luminance is represented by duty (%).

In the increased brightening animation, the luminance is nonlinearly changed in 100 steps. Assuming that each step corresponds to 10 milliseconds, one cycle is 1 second (= 10 milliseconds × 100 steps) long.

A luminance L1(S) at step S in the increased brightening animation is calculated by the calculation expression "L1(S) = Lbase + (Lmax - Lbase) × T1(S)/100", where Lmax denotes the maximum luminance, Lbase denotes the base luminance, and T1(S) denotes the table value at the step S. It is desirable that the table value T1(S) at the step S be set in a table in association with the step S in advance. In this table, the table value T1(S) is set to change between 0% and 100%. It is also desirable that the table value T1(S) be set so that the luminance L1(S) shows a sine curve as the step S increases. Accordingly, even if the maximum luminance Lmax and the base luminance Lbase change, the luminance L1(S) exhibits a sine curve.

Here, in a case where the LEDs perform the remaining battery capacity display step animation, the increased brightening animation defines a change in luminance after the LEDs are normally lit. The luminance before the LEDs are normally lit is the base luminance Lbase.

In the example in Fig. 5, the luminance of the LED #1 is the base luminance Lbase until step 6 (60 milliseconds), becomes a luminance L 1(6) of the increased brightening animation at step 6 (60 milliseconds), and then increases to the maximum luminance Lmax in accordance with the graph of the increased brightening animation. The luminance of the LED #2 is the base luminance Lbase until step 12 (120 milliseconds), becomes a luminance L1(12) of the increased brightening animation at step 12 (120 milliseconds), and then increases to the maximum luminance Lmax in accordance with the graph of the increased brightening animation. The luminance of the LED #3 is the base luminance Lbase until step 18 (180 milliseconds), becomes a luminance L1(18) of the increased brightening animation at step 18 (180 milliseconds), and then increases to the maximum luminance Lmax in accordance with the graph of the increased brightening animation.

In Fig. 5, an example is illustrated in which the LEDs #1 to #3 are normally lit, and thus the LEDs #4 to #8 remain lit at the baseline level. The LEDs #4 to #8 may be normally lit. In this case, the luminance of the LED #4 is the base luminance Lbase until step 24, becomes a luminance L1(24) of the increased brightening animation at step 24, and then increases to the maximum luminance Lmax in accordance with the graph of the increased brightening animation. The luminance of the LED #5 is the base luminance Lbase until step 30, becomes a luminance L 1(30) of the increased brightening animation at step 30, and then increases to the maximum luminance Lmax in accordance with the graph of the increased brightening animation. The luminance of the LED #6 is the base luminance Lbase until step 36, becomes a luminance L1(36) of the increased brightening animation at step 36, and then increases to the maximum luminance Lmax in accordance with the graph of the increased brightening animation. The luminance of the LED #7 is the base luminance Lbase until step 42, becomes a luminance L1(42) of the increased brightening animation at step 42, and then increases to the maximum luminance Lmax in accordance with the graph of the increased brightening animation. The luminance of the LED #8 is the base luminance Lbase until step 48, becomes a luminance L1(48) of the increased brightening animation at step 48, and then increases to the maximum luminance Lmax in accordance with the graph of the brightening animation.

Thereafter, when the remaining battery capacity becomes less than or equal to the remaining capacity for one remaining stick substrate, the control unit 90 performs control to change the display mode of at least one LED among the N LEDs to the first display mode. In the following description, it is assumed that the remaining capacity for one remaining stick substrate is 20%, as described with reference to Figs. 4(a) to 4(h). The LED #1 among the LEDs #1 to #8 is taken as an example of at least one LED among the N LEDs. The LED # 1 is an example of one display unit whose state is changed last to the reduced-luminance state with a decrease in remaining battery capacity. Further, as an example of the first display mode, a display mode in which an LED is caused to normally blink is taken as an example. The normal blinking is an example of a mode of blinking at the first speed.

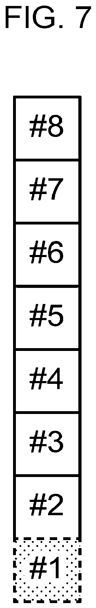

Fig. 7 is a diagram illustrating a display mode of the eight LEDs when the remaining battery capacity becomes less than or equal to 20%. In this case, the control unit 90 causes the LED # 1 to normally blink, as indicated by dot hatching in its thick broken-line box. In this specification, causing an LED to normally blink means causing the LED to blink at a cycle of one second. The control unit 90 performs a blinking animation, which will be described below, as a luminance animation that defines a change in the luminance of the LED # 1 to cause the LED # 1 to normally blink. Then, the control unit 90 causes the LED #1 to normally blink for a period of three seconds, for example.

Still thereafter, when the remaining battery capacity becomes less than or equal to the remaining capacity for no remaining stick substrates, the control unit 90 performs control to change the display mode of the above-described at least one LED among the N LEDs to the second display mode. In the following description, the above-described at least one LED among the N LEDs is assumed to be the LED # 1 among the LEDs # 1 to #8, as described with reference to Fig. 7. Further, as an example of the second display mode, a display mode in which an LED is caused to blink rapidly is taken as an example. The rapid blinking is an example of a mode of blinking at a second speed faster than the first speed.

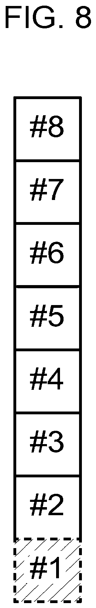

Fig. 8 is a diagram illustrating a display mode of the eight LEDs when the remaining battery capacity becomes less than or equal to the remaining capacity for no remaining stick substrates. In this case, the control unit 90 causes the LED # 1 to blink rapidly, as indicated by diagonal hatching in its thick broken-line box. In this specification, causing an LED to blink rapidly means causing the LED to blink at a cycle of 500 milliseconds. The control unit 90 performs a blinking animation, which will be described below, as a luminance animation that defines a change in the luminance of the LED # 1 to cause the LED # 1 to blink rapidly. Then, the control unit 90 causes the LED # 1 to blink rapidly for a period of two seconds, for example. Alternatively, after causing the LED # 1 to blink rapidly four times, the control unit 90 may turn off the LED # 1 even before a period of two seconds elapses.

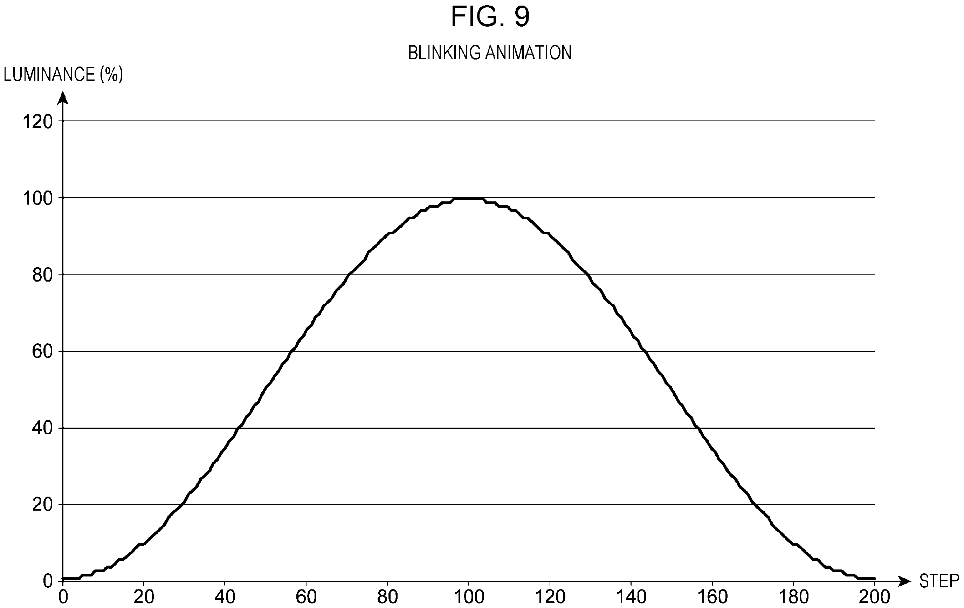

The blinking animation will be described here. Fig. 9 is a graph illustrating a change in luminance in the blinking animation. Also in Fig. 9, the luminance is represented by duty (%).

In the blinking animation, the luminance is nonlinearly changed in 200 steps. Assuming that each step corresponds to 5 milliseconds, one cycle is 1 second (= 5 milliseconds × 200 steps) long, that is, the cycle of the normal blinking described with reference to Fig. 7. Assuming that each step corresponds to 2.5 milliseconds, one cycle is 500 milliseconds (= 2.5 milliseconds × 200 steps) long, that is, the cycle of the rapid blinking described with reference to Fig. 8.

A luminance L2(S) at step S in the blinking animation is calculated by the calculation expression "L2(S) = Lbase + (Lmax - Lbase) × T2(S)/100", where Lmax denotes the maximum luminance, Lbase denotes the base luminance, and T2(S) denotes the table value at the step S. It is desirable that the table value T2(S) at the step S be set in a table in association with the step S in advance. In this table, the table value T2(S) is set to change between 0% and 100%. It is also desirable that the table value T2(S) be set so that the luminance L2(S) shows a sine curve as the step S increases. Accordingly, even if the maximum luminance Lmax and the base luminance Lbase change, the luminance L2(S) exhibits a sine curve.

### [Details of Operation of Inhaler Device]

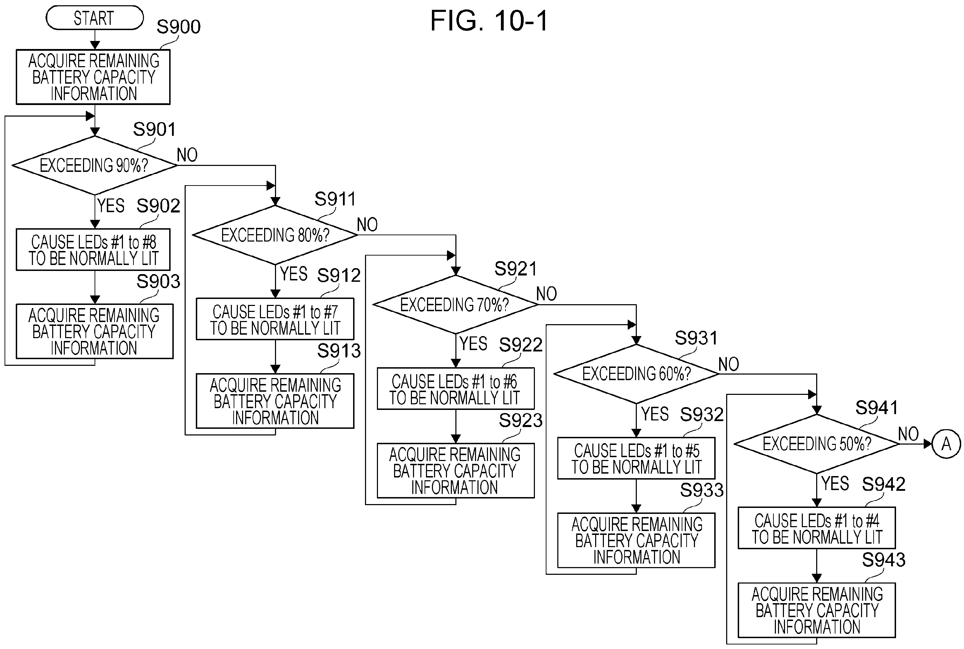

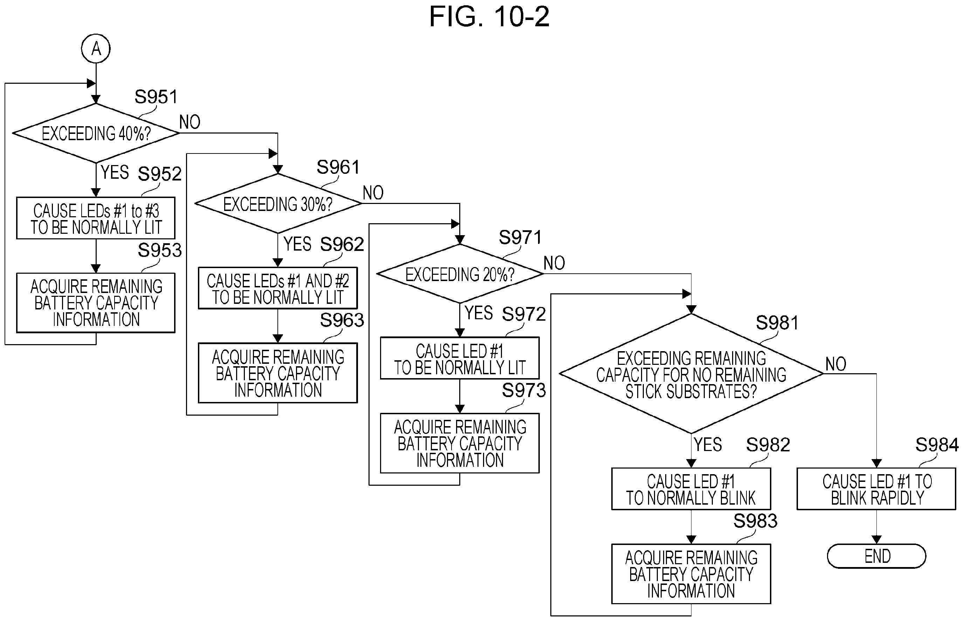

Figs. 10-1 and 10-2 are a flowchart illustrating an example operation of the control unit 90 of the inhaler device 1 according to the present embodiment. The following describes only normal lighting or normal blinking of at least one LED among the LEDs #1 to #8, and does not describe lighting of the remaining LED(s) at the baseline level. Neither step animation nor luminance animation will be described.

First, as illustrated in Fig. 10-1, the control unit 90 acquires remaining battery capacity information indicating the remaining battery capacity from the remaining capacity meter IC (step 900).

Then, the control unit 90 determines whether the remaining battery capacity indicated by the remaining battery capacity information acquired in step 900 exceeds 90% (step 901). If it is determined that the remaining battery capacity exceeds 90%, the control unit 90 causes the LEDs #1 to #8 to be normally lit (step 902). Then, the control unit 90 acquires remaining battery capacity information indicating the remaining battery capacity from the remaining capacity meter IC (step 903), and then returns the process to step 901. Then, the control unit 90 repeats the processing of step 902 and step 903 until it is determined that the remaining battery capacity indicated by the remaining battery capacity information acquired in step 903 is less than or equal to 90%. If it is determined that the remaining battery capacity is less than or equal to 90%, the control unit 90 advances the process to step 911.

Then, the control unit 90 determines whether the remaining battery capacity indicated by the remaining battery capacity information acquired in step 903 exceeds 80% (step 911). If it is determined that the remaining battery capacity exceeds 80%, the control unit 90 causes the LEDs #1 to #7 to be normally lit (step 912). Then, the control unit 90 acquires remaining battery capacity information indicating the remaining battery capacity from the remaining capacity meter IC (step 913), and then returns the process to step 911. Then, the control unit 90 repeats the processing of step 912 and step 913 until it is determined that the remaining battery capacity indicated by the remaining battery capacity information acquired in step 913 is less than or equal to 80%. If it is determined that the remaining battery capacity is less than or equal to 80%, the control unit 90 advances the process to step 921.

Then, the control unit 90 determines whether the remaining battery capacity indicated by the remaining battery capacity information acquired in step 913 exceeds 70% (step 921). If it is determined that the remaining battery capacity exceeds 70%, the control unit 90 causes the LEDs #1 to #6 to be normally lit (step 922). Then, the control unit 90 acquires remaining battery capacity information indicating the remaining battery capacity from the remaining capacity meter IC (step 923), and then returns the process to step 921. Then, the control unit 90 repeats the processing of step 922 and step 923 until it is determined that the remaining battery capacity indicated by the remaining battery capacity information acquired in step 923 is less than or equal to 70%. If it is determined that the remaining battery capacity is less than or equal to 70%, the control unit 90 advances the process to step 931.

Then, the control unit 90 determines whether the remaining battery capacity indicated by the remaining battery capacity information acquired in step 923 exceeds 60% (step 931). If it is determined that the remaining battery capacity exceeds 60%, the control unit 90 causes the LEDs #1 to #5 to be normally lit (step 932). Then, the control unit 90 acquires remaining battery capacity information indicating the remaining battery capacity from the remaining capacity meter IC (step 933), and then returns the process to step 931. Then, the control unit 90 repeats the processing of step 932 and step 933 until it is determined that the remaining battery capacity indicated by the remaining battery capacity information acquired in step 933 is less than or equal to 60%. If it is determined that the remaining battery capacity is less than or equal to 60%, the control unit 90 advances the process to step 941.

Then, the control unit 90 determines whether the remaining battery capacity indicated by the remaining battery capacity information acquired in step 933 exceeds 50% (step 941). If it is determined that the remaining battery capacity exceeds 50%, the control unit 90 causes the LEDs #1 to #4 to be normally lit (step 942). Then, the control unit 90 acquires remaining battery capacity information indicating the remaining battery capacity from the remaining capacity meter IC (step 943), and then returns the process to step 941. Then, the control unit 90 repeats the processing of step 942 and step 943 until it is determined that the remaining battery capacity indicated by the remaining battery capacity information acquired in step 943 is less than or equal to 50%. If it is determined that the remaining battery capacity is less than or equal to 50%, the control unit 90 advances the process to step 951.

Then, as illustrated in Fig. 10-2, the control unit 90 determines whether the remaining battery capacity indicated by the remaining battery capacity information acquired in step 943 exceeds 40% (step 951). If it is determined that the remaining battery capacity exceeds 40%, the control unit 90 causes the LEDs #1 to #3 to be normally lit (step 952). Then, the control unit 90 acquires remaining battery capacity information indicating the remaining battery capacity from the remaining capacity meter IC (step 953), and then returns the process to step 951. Then, the control unit 90 repeats the processing of step 952 and step 953 until it is determined that the remaining battery capacity indicated by the remaining battery capacity information acquired in step 953 is less than or equal to 40%. If it is determined that the remaining battery capacity is less than or equal to 40%, the control unit 90 advances the process to step 961.

Then, the control unit 90 determines whether the remaining battery capacity indicated by the remaining battery capacity information acquired in step 953 exceeds 30% (step 961). If it is determined that the remaining battery capacity exceeds 30%, the control unit 90 causes the LEDs #1 and #2 to be normally lit (step 962). Then, the control unit 90 acquires remaining battery capacity information indicating the remaining battery capacity from the remaining capacity meter IC (step 963), and then returns the process to step 961. Then, the control unit 90 repeats the processing of step 962 and step 963 until it is determined that the remaining battery capacity indicated by the remaining battery capacity information acquired in step 963 is less than or equal to 30%. If it is determined that the remaining battery capacity is less than or equal to 30%, the control unit 90 advances the process to step 971.

Then, the control unit 90 determines whether the remaining battery capacity indicated by the remaining battery capacity information acquired in step 963 exceeds 20% (step 971). If it is determined that the remaining battery capacity exceeds 20%, the control unit 90 causes the LED #1 to be normally lit (step 972). Then, the control unit 90 acquires remaining battery capacity information indicating the remaining battery capacity from the remaining capacity meter IC (step 973), and then returns the process to step 971. Then, the control unit 90 repeats the processing of step 972 and step 973 until it is determined that the remaining battery capacity indicated by the remaining battery capacity information acquired in step 973 is less than or equal to 20%. If it is determined that the remaining battery capacity is less than or equal to 20%, the control unit 90 advances the process to step 981.

Then, the control unit 90 determines whether the remaining battery capacity indicated by the remaining battery capacity information acquired in step 973 exceeds the remaining capacity for no remaining stick substrates (step 981). If it is determined that the remaining battery capacity exceeds the remaining capacity for no remaining stick substrates, the control unit 90 causes the LED #1 to normally blink (step 982). Then, the control unit 90 acquires remaining battery capacity information indicating the remaining battery capacity from the remaining capacity meter IC (step 983), and then returns the process to step 981. Then, the control unit 90 repeats the processing of step 982 and step 983 until it is determined that the remaining battery capacity indicated by the remaining battery capacity information acquired in step 983 is less than or equal to the remaining capacity for no remaining stick substrates. On the other hand, if it is determined that the remaining battery capacity is less than or equal to the remaining capacity for no remaining stick substrates, the control unit 90 causes the LED # 1 to blink rapidly (step 984).

The operation described above is performed in response to the user sliding the shutter 50 to open the opening 84. In this case, the control unit 90 displays the remaining battery capacity even after the panel 10 has been removed from the body housing 20. In a case where the remaining battery capacity is displayed in response to the user opening the opening 84, the control unit 90 does not display the remaining battery capacity for a period of three seconds thereafter even when the user slides the shutter 50 again to open the opening 84.

Alternatively, the operation described above is performed in response to the user sliding the shutter 50 to close the opening 84. In this case, the control unit 90 displays the remaining battery capacity only after smoking is completed or when smoking is interrupted, and does not display the remaining battery capacity if no heating is performed. In a case where the remaining battery capacity is displayed in response to the opening 84 being closed after smoking is completed or when smoking is interrupted, the control unit 90 turns off all of the LEDs # 1 to #8 for a period of 500 milliseconds and then displays the remaining battery capacity.

### [Modifications]

While in the foregoing description, the LEDs have the same maximum luminance regardless of the remaining battery capacity, the present invention is not limited thereto. The maximum luminance of the LEDs may be changed in accordance with the remaining battery capacity. For example, the luminance of the LEDs may be controlled to be high when the remaining battery capacity is high.

While in the foregoing description, the N LEDs are arranged in a vertical line, the present invention is not limited thereto. For example, the N LEDs may be arranged in any shape as long as the N LEDs are continuously arranged. For example, the N LEDs may be arranged in an annular shape. Alternatively, the N LEDs may be discretely arranged instead of being continuously arranged.

While a case has been described in which the present invention is applied to a heat-not-burn cigarette, the present invention is not limited thereto. The present invention is applicable to various inhaler devices for inhaling an aerosol, such as an electronic cigarette and a nebulizer. The inhalation components to be generated may include a gas such as invisible vapor in addition to the aerosol. The present invention may also be applied to a display device connected to a device other than an inhaler device and configured to display information on the device.

### [Advantageous Effects of Present Embodiment]

The inhaler device 1 according to the present embodiment is configured such that the display mode of at least one display unit among a plurality of display units is changed to the first display mode in response to the remaining battery capacity being less than or equal to the remaining capacity for one remaining stick substrate and the display mode of the above-described at least one display unit among the plurality of display units is changed to the second display mode in response to the remaining battery capacity being less than or equal to the remaining capacity for no remaining stick substrates. Accordingly, the present embodiment allows easy recognition of the remaining battery capacity even when the remaining battery capacity becomes less than or equal to the remaining capacity for one remaining stick substrate.

### Reference Signs List

- 1: inhaler device
- 10: panel
- 20: body housing
- 30: body
- 40: housing
- 50: shutter
- 60: display window
- 70: external connection terminal
- 80: holding unit
- 81: heating unit
- 82: heat insulating unit
- 90: control unit
- 91: power supply unit
- 92: sensor unit
- 93: notification unit
- 94: storage unit
- 95: communication unit

## Claims

1. A display device comprising:
a plurality of display units for displaying a remaining capacity of a battery; and
a control unit that performs control to change a display mode of all of the plurality of display units in a case where the remaining capacity of the battery is larger than a first remaining capacity to present a change of the remaining capacity of the battery within a range larger than the first remaining capacity, to change a display mode of at least one display unit among the plurality of display units to a first display mode in a case where the remaining capacity of the battery becomes less than or equal to the first remaining capacity, and to change the display mode of the at least one display unit to a second display mode in a case where the remaining capacity of the battery becomes less than or equal to a second remaining capacity lower than the first remaining capacity.

2. The display device according to claim 1, wherein, in a case where the remaining capacity of the battery is larger than the first remaining capacity, the control unit performs control to change states of the plurality of display units to a reduced-luminance state one by one with a decrease in the remaining capacity of the battery.

3. The display device according to claim 2, wherein the at least one display unit is one display unit whose state is changed last among the plurality of display units to the reduced-luminance state with a decrease in the remaining capacity of the battery.

4. The display device according to claim 1, wherein the first display mode is a mode of blinking at a first speed, and
wherein the second display mode is a mode of blinking at a second speed faster than the first speed.

5. A display device comprising:
a plurality of display units for displaying a remaining capacity of a battery; and
a control unit that performs control to change a display mode of at least one display unit among the plurality of display units to a first display mode in a case where the remaining capacity of the battery becomes less than or equal to a first remaining capacity, and to change the display mode of the at least one display unit to a second display mode in a case where the remaining capacity of the battery becomes less than or equal to a second remaining capacity lower than the first remaining capacity.

6. An inhaler device comprising:
a heating unit that heats a substrate holding an aerosol source with electric power from a battery to generate an aerosol;
a plurality of display units for displaying a remaining capacity of the battery; and
a control unit that performs control to change a display mode of all of the plurality of display units in a case where the remaining capacity of the battery is larger than a first remaining capacity to present a change of the remaining capacity of the battery within a range larger than the first remaining capacity, to change a display mode of at least one display unit among the plurality of display units to a first display mode in a case where the remaining capacity of the battery becomes less than or equal to the first remaining capacity, and to change the display mode of the at least one display unit to a second display mode in a case where the remaining capacity of the battery becomes less than or equal to a second remaining capacity lower than the first remaining capacity.

7. The inhaler device according to claim 6, wherein the first remaining capacity is a remaining capacity of the battery required to complete heating of one substrate.

8. The inhaler device according to claim 6, wherein the second remaining capacity is a predetermined remaining capacity less than the remaining capacity of the battery required to complete heating of one substrate.

9. The inhaler device according to claim 8, wherein the predetermined remaining capacity is a remaining capacity of the battery required to change the display mode of the at least one display unit to the second display mode.

10. A display method comprising the steps of:
changing, in a case where a remaining capacity of a battery is larger than a first remaining capacity, a display mode of all of a plurality of display units to present a change of the remaining capacity of the battery within a range larger than the first remaining capacity;
changing, in a case where the remaining capacity of the battery becomes less than or equal to the first remaining capacity, a display mode of at least one display unit among the plurality of display units to a first display mode; and
changing, in a case where the remaining capacity of the battery becomes less than or equal to a second remaining capacity lower than the first remaining capacity, the display mode of the at least one display unit to a second display mode.

11. A program for causing a computer to implement the functions of:
changing, in a case where a remaining capacity of a battery is larger than a first remaining capacity, a display mode of all of a plurality of display units to present a change of the remaining capacity of the battery within a range larger than the first remaining capacity;
changing, in a case where the remaining capacity of the battery becomes less than or equal to the first remaining capacity, a display mode of at least one display unit among the plurality of display units to a first display mode; and
changing, in a case where the remaining capacity of the battery becomes less than or equal to a second remaining capacity lower than the first remaining capacity, the display mode of the at least one display unit to a second display mode.
